# EUROPEAN PATENT APPLICATION

(11) **EP 2 957 888 A1**
(43) Date of publication of application: **23.12.2015**
(21) Application number: 14172591.1
(22) Date of filing: 16.06.2014
(51) Int. Cl.: G01N 3/56, G01N 17/04

(54) **Device for dispensing friction material, in particular in an erosion control device**

(71) Applicant: Instytut Technologii Eksploatacji - Panstwowy Instytut Badawczy, 26-600 Radom (PL)
(72) Inventor: Zbrowski, Andrzej, 26-600 Radom (PL); Smolik, Jerzy, 26-600 Radom (PL); Mizak, Wojciech, 26-660 Wielogóra (PL); Mazurkiewicz, Adam, 26-600 Radom (PL)
(74) Representative: Rumpel, Alicja

(57) **Abstract**

A device for dispensing friction material, particularly in the erosion control device, comprising a conveyor belt (1) powered by a regulated-speed DC engine (2), installed in the transporter chamber (14) and enclosed (6), above which a friction material container (3) is installed with a capped (4) hole for feeding the friction material, which, in the lower part, is enclosed in an exchangeable flange (5) connecting the container (3) with the conveyor belt body (6).

## Description

The subject of this invention is a device for dispensing friction material, in particular in the erosion control device.

According to impact erosion control tests, the process of erosion takes place as a result of friction material particles impacting the surface of the eroded 5 sample. The tested material is exposed to the action of a mixture of friction material and air. When performing the tests, it is essential that the amounts of the friction material are precisely dosed in order to ensure uniform distribution of the friction material in the air stream and 100% repeatability of tests.

Specialist publications have listed ejector pumps using the Venturi effect for dispersing the friction material, in which the air stream automatically sucks friction material from the container. The amount of friction material drawn from the container depends on the velocity of the air stream and the gsm of the erodent. This solution excludes the possibility of controlling the amount of friction material dispensed and the velocity of the mixture, since the amount of friction material particles collected depends on the velocity of air (Patejuk A., Krupicz B., Piwnik J.: Wplyw wielkości cz 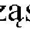 stek fazy zbroj 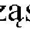 cej na zużycie materia 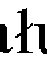 u kompozytowego FeAl-Al1203. KOMPOZYTY (COMPOSITES) 4(2004)11).

Another solution applied in dispensing friction material is the screw feeder. However, negative impact of the friction material on the screw feeder and its auxiliary equipment causes quick wear of particular elements of the system, which may result in uncontrolled parameter change in the dispensing process (Denga T., Bingleya M.S., Bradleya M.S.A., De Silvab S.R.: A comparison of the gas-blast and centrifugal-accelerator erosion 25 testers: The influence of particle dynamics. Wear 265, 2008: 945-955).

Another bulk product dispensing system presented in the patent claim PL 387747 comprises a body connected to the bottom of a loose product container. The body is equipped with an inlet and the lower product outlet. Inside the body, there is a ring with at least one dosing chamber.

In turn, patent claim PL 144534 specifies a powder dispenser cooperating with a plasma torch for plasma spraying, included in a vertical container in the form of a cylindrical feeding chute transforming into a conical piling chamber, equipped with a grid at the top and with a conical diaphragm partially closing the outlet of the piling chamber. The container also includes a rotating disc with a ring-shaped pit, mounted in a bearing in the body, and under the container, there is a receptacle connected to a vibrator, creating a loosening chamber around the conical diaphragm, and connected, via a rising track, to the outlet of the vertical cylinder, the outlet of which is located directly above the ring-shaped pit in the rotating disc located below the receptacle.

Another example includes dispensers operating on the basis of measurements of the weight of the dispensed substance, as defined in the patent description no. PL386061. An automatic weight dispenser of bulk material; an extra weight feeder is installed under the storage container, and the structure and of the feeder ensures quick, cyclic filling of the weight container. The weight container and the weight feeder directly mounted to it constitute the mechanic component of the weight module, which is suspended on a supporting structure on a strain gauge weight transducer. With the exception of the strain gauge weight transducer, all elements of the electronic and electrical device system are located in one electrical cabinet. The system is operated from one of three available levels: automatic - by passing synchronizing signals to dedicated PLC outlets; manual - through the operator's panel; renovation - through buttons located on the electrical cabinet.

Dispensing of the erodent depends on the structural solution adopted in the system, which affects the accuracy and evenness of dispensing the friction material. The majority of dispensers applied in erosion control devices do not meet the requirements for precise dosage of the friction material and are not able to ensure the proper repeatability of dispensing process results. The purpose of the invention was to dispense friction material in a precise and repeatable manner in the erosion control device, whereas, the technical assignment was to design a device for dispensing friction material.

The scope of parameters of the developed dispenser allows for full realization of standardized tests according to ASTM G 76 as well as other non-standardized tests. Its modular structure allows for simple and easy replacement of the dispensing flange into one with larger or smaller diameter and with varying length, thanks to which the distance between the feeder conveyor and the face surface of the flange may be changed. Selection of the internal diameter value of the flange depends on the gsm of the friction material to be dispensed, and on the required friction material feeding speed. In the developed dispensing device, an electromagnet with a vibrating push rod fulfills an essential task, since it prevents the dispensing flange from clogging. Increasing the frequency of vibrations increases the accuracy, repeatability and evenness of dispensing. The device guarantees accurate dispensing in a continuous manner, irrespective of the air stream velocity.

The ejector friction material feeding system utilizes the Venturi effect, in which the air stream automatically sucks friction material from the container. The amount of friction material drawn from the container depends on the velocity of the air stream and the gsm of the erodent. This solution excludes the possibility of controlling the amount of friction material dispensed and the velocity of the mixture, since the amount of friction material particles collected depends on the velocity of air (Patejuk A., Krupicz B., Piwnik J.: Wplyw wielkości cz 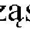 stek fazy zbroj 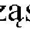 cej na zużycie materialu kompozytowego FeAl-Al1203. KOMPOZYTY (COMPOSITES) 4(2004)11).

Another solution applied in dispensing friction material is the screw feeder. However, negative impact of the friction material on the screw feeder and its auxiliary equipment causes quick wear of particular elements of the system, which may result in uncontrolled parameter change in the dispensing process (Denga T., Bingleya M.S., Bradleya M.S.A., De Silvab S.R.: A comparison of the gas-blast and centrifugal-accelerator erosion 25 testers: The influence of particle dynamics. Wear 265, 2008: 945-955).

Patent claim number PL 387747 (A1) specifies a bulk product dispenser. Patent claim number PL 144534 (B1) specifies a powder dispenser. Patent claim number PL 386061 (A1) specifies an automatic weight dispenser of bulk material.

The device for dispensing friction material, particularly in the erosion control device, contains a conveyor belt powered by a regulated-speed DC engine, mounted in the transporter chamber and enclosed. A friction material container with a capped inlet for feeding friction material is located in the upper part of the dispenser, above the conveyor belt. In the lower part, the friction material container is enclosed with an exchangeable flange, which links the container with the conveyor belt body. The flange fulfills an essential role in the dispensing process, since it allows for adjusting the amount of friction material fed to the transporter. A pipe feeding compressed air, linking the friction material container, via the valve system and the linking tube from the valve system, with the conveyor belt body is mounted in the upper part of the container 3 for friction material. In a beneficial embodiment of the invention, the dispenser chamber is equipped with a temperature sensor.

In its interior, the flange is equipped with a push rod driven by an electromagnet, which prevents the clogging of friction material in the flange. When the electromagnet is actuated, the push rod makes a reciprocating motion, which allows for smooth distribution of the friction material on the dispensing flange.

The conveyor belt cooperates with the quick friction material feeding cut-off module. The module contains a double-action pneumatic actuator, a bistable pneumatic valve and a locking mechanism.

The device for dispensing friction material is equipped with a set of replacement flanges of varying length and internal diameter. Application of a larger-diameter flange allows for increasing the dose of friction material dispensed. Prior to commencing the replacement of the flange, compressed air supply must be cut off by locking the pipes feeding compressed air to the friction material container and the transporter chamber. Cutting off compressed air supply is performed by closing the valves.

When the dispensing device is actuated, the servomotor switches the lock into its extreme position, after which the friction material enters into smooth motion on the transporter conveyor belt. When the dispensing process is stopped, the servomotor assumes the second extreme position and actuates the lock, which, by changing its position, presses the conveyor belt against the dispensing nozzle, blocking the outlet of the friction material container to the chamber. This solution effectively eliminates the phenomenon of uncontrolled flow of friction material from the container to the transporter chamber.

The process of dispensing friction material depends on the stable operation of the transporter and the pressure inside the dispenser. A temporary pressure drop occurs during interruptions in the dispensing process, or during transporter overhaul. An uncontrolled outflow of friction material through the dispenser nozzle occurs in the process of leveling pressure in the friction material container and the transporter chamber. In the solution according to the invention, this phenomenon was eliminated through the application of the module.

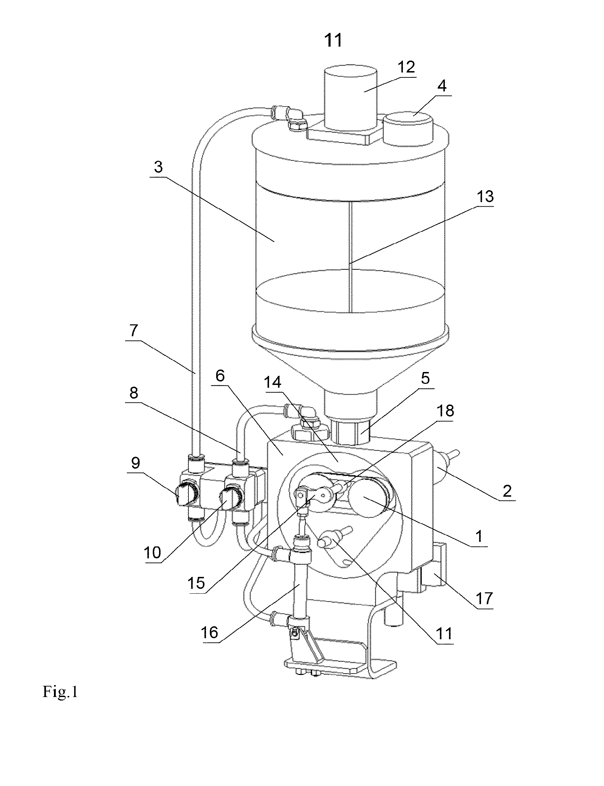

The device for dispensing friction material, particularly in the erosion control device was presented in the figure, in which fig. 1 presents the view of the device according to the invention.

The device for dispensing friction material, particularly in the erosion control device, contains a conveyor belt 1 powered by a regulated-speed DC engine 2, mounted in the transporter chamber 14 and enclosed. A friction material container 3 with a capped inlet 4 for feeding friction material is located in the upper part of the dispenser, above the conveyor belt. In the lower part, the friction material container 3 is enclosed with an exchangeable flange 5, which links the container 3 with the conveyor belt body 6. The flange 5 fulfills an essential role in the dispensing process, since it allows for adjusting the amount of friction material fed to the transporter 1. A pipe 7 feeding compressed air, linking the friction material container 3, via the valve system 9 and 10 and the linking tube from the valve system, with the conveyor belt body 6 is mounted in the upper part of the container 3 for friction material. In a beneficial embodiment of the invention, the dispenser chamber is equipped with a temperature sensor 11.

In its interior, the flange 5 is equipped with a push rod 13 driven by an electromagnet 12, which prevents the clogging of friction material in the flange 5. When the electromagnet 12 is actuated, the push rod 13 makes a reciprocating motion, which allows for smooth distribution of the friction material on the dispensing flange 5.

The conveyor belt 1 cooperates with the quick friction material feeding cut-off module 15. The module 15 contains a double-action pneumatic actuator 16, a bistable pneumatic valve 17 and a locking mechanism 18.

The device for dispensing friction material is equipped with a set of replacement flanges of varying length and internal diameter. Application of a larger-diameter flange 5 allows for increasing the dose of friction material dispensed. Prior to commencing the replacement of the flange 5, compressed air supply must be cut off by locking the pipes 7 and 8 feeding compressed air to the friction material container 3 and the transporter chamber. Cutting off compressed air supply is performed by closing the valves 9 and 10.

When the dispensing device is actuated, the servomotor 16 switches the lock 18 into its extreme position, after which the friction material enters into smooth motion on the transporter conveyor belt 1. When the dispensing process is stopped, the servomotor 16 assumes the second extreme position and actuates the lock 18, which, by changing its position, presses the conveyor belt 1 against the dispensing nozzle 5, blocking the outlet of the friction material container 3 to the chamber 14. This solution effectively eliminates the phenomenon of uncontrolled flow of friction material from the container 3 to the transporter chamber 14.

The process of dispensing friction material depends on the stable operation of the transporter 1 and the pressure inside the dispenser. A temporary pressure drop occurs during interruptions in the dispensing process, or during transporter 1 overhaul. An uncontrolled outflow of friction material through the dispenser nozzle 5 occurs in the process of leveling pressure in the friction material container 3 and the transporter chamber 14. In the solution according to the invention, this phenomenon was eliminated through the application of the module 15.

## Claims

1. The device for dispensing friction material, particularly in the erosion control device, **characterized in that** it contains a conveyor belt (1) powered by a regulated-speed DC engine (2), mounted in the transporter chamber (14) and enclosed (6). A friction material container (3) with a capped inlet (4) for feeding friction material is located above. In the lower part, the friction material container (3) is enclosed with an exchangeable flange (5), which links the container (3) with the conveyor belt body (6).

2. The device according to claim 1 or 2, **characterized in that** a pipe (7) feeding compressed air, linking the friction material container (3), via the valve system (9 and 10) and the linking tube from the valve system (8), with the conveyor belt body (6) is mounted in the upper part of the container (3) for friction material.

3. The device according to claim 1 or 2, **characterized in that** the dispenser chamber is equipped with a temperature sensor (11).

4. The device according to claim 1 or 2, **characterized in that** the flange (5) is equipped with a push rod (13) driven by an electromagnet (12), makes a reciprocating motion, which allows for smooth distribution of the friction material on the dispensing flange (5).

5. The device according to claim 1, 2, 3 or 4 **characterized in that** the conveyor belt (1) cooperates with the quick friction material feeding cut-off module (15).

6. The device according to claim 5 **characterized in that** the module (15) contains a double-action pneumatic actuator (16), a bistable pneumatic valve (17) and a locking mechanism (18).

7. The device according to claim 1, 2, 3, 4, 5 or 6 **characterized in that** the device for dispensing friction material is equipped with a set of replacement flanges of varying length and internal diameter, and during their replacement, the valve (9 and 10) remains in the closed position.
